# EUROPEAN PATENT APPLICATION

(11) **EP 4 644 085 A1**
(43) Date of publication of application: **05.11.2025**
(21) Application number: 25171526.4
(22) Date of filing: 21.04.2025
(51) Int. Cl.: B29C 45/27

(54) **METHOD AND APPARATUS FOR INJECTING A MOLTEN MATERIAL DURING AN INJECTION MOLDING PROCESS**

(30) Priority: 30.04.2024 IT 202400009838
(71) Applicant: Inglass S.p.A., 31020 San Polo di Piave (Treviso) (IT)
(72) Inventor: ROSSI, Massimo, 31020 San Polo di Piave (TV) (IT); PERUCH, Andrea, 31020 San Polo di Piave (TV) (IT)
(74) Representative: Citron, Massimiliano

(57) **Abstract**

A method is described for injecting a molten material from a nozzle into a mold during an injection molding process. The molten material is guided towards the nozzle via a tip insert which is provided with an internal central cavity that develops along a longitudinal axis, and houses in the internal cavity a valve pin translatable along said axis to reach one end of the tip insert and there adjust the flow of molten material.

The molten material travels the central cavity parallel to the longitudinal axis while surrounding the valve pin, arrives in proximity of the nozzle and deviates for a first time away from said axis to exit the internal central cavity through at least one first channel which takes it outside the internal central cavity and into an auxiliary chamber of the tip insert, approaches the nozzle traveling a distance inside the auxiliary chamber, deviates for a second time to get closer again to said axis and re-enters the internal central cavity through at least one second channel, distinct from the at least one first channel and closer to the nozzle than the at least one first channel, which puts in fluidic communication the auxiliary chamber with internal central cavity, and travels along a final section of internal central cavity to reach the nozzle and proceeds inside the mould.

## Description

The invention relates to a method and apparatus for injecting a molten material during an injection molding process.

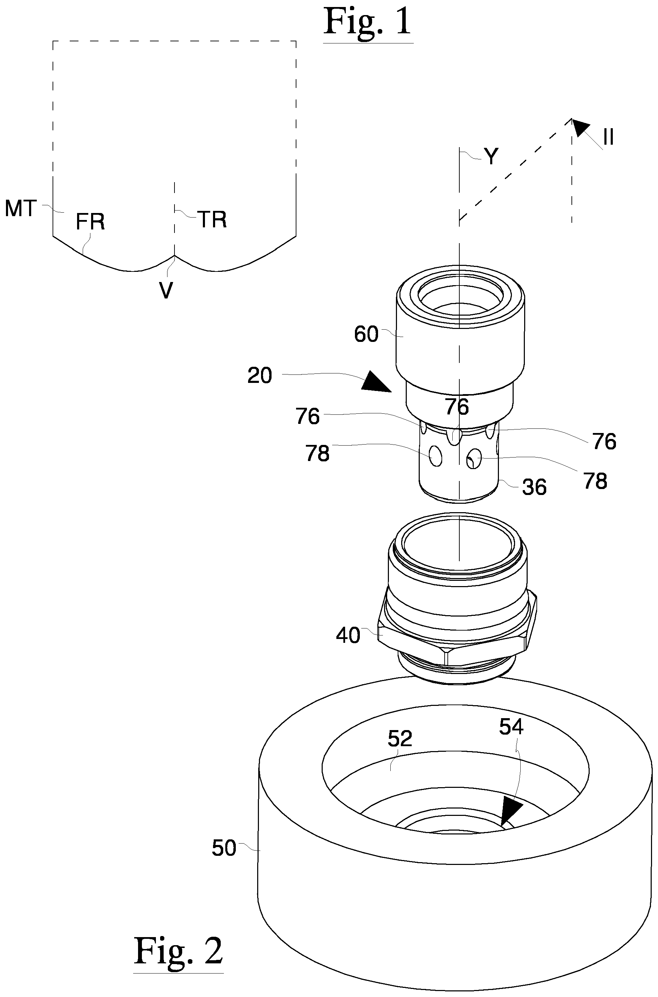

One of the most historically recurring problems when molding polycarbonate and polyamide in particular is called "heart filling". The advancement front FR of the plastic material MT, see fig. 1, takes on a heart or cusp shape where the vertex V of the cusp creates, during filling, a junction trace TR that compromises the aesthetics of the molded part and therefore the success of the molding. The injection of polycarbonate and polyamide is used for example for lenses or transparent pieces where the degree of finishing required is very high. Unfortunately, the defects are very visible if one molds, for example, a car headlight (the light source amplifies the effect of the defect).

To date, these particular molding defects are treated individually and solved by trial and error by modifying the molding parameters until a sufficient level of defect attenuation is achieved. In other cases, the defect is not resolved but is "moved" (by modifying the parameters) to a hidden area.

The main object of the invention is to improve this state of the art.

Another object is to eliminate or at least reduce the problem of heart-shaped filling.

One aspect of the invention relates to a method for injecting a molten material from a nozzle into a mold during an injection molding process,
wherein the molten material is guided towards the nozzle (injection point) by means of a tip insert that
   is provided with a central internal cavity that develops along a longitudinal axis, and
   houses in the internal cavity a valve pin mounted therein which is translatable along said axis to reach one end of the tip insert and there measure out the flow of molten material exiting the nozzle by occluding the nozzle to an adjustable extent,
wherein the molten material
   - runs through the central internal cavity parallel to the longitudinal axis and preferably surrounding the valve pin,
   - arrives in proximity of the nozzle and deviates for a first time moving away from said axis to exit the internal central cavity through at least one first channel which takes it outside the internal cavity and into an auxiliary chamber of the tip insert,
   - approaches the nozzle by traveling a distance inside the auxiliary chamber and outside the internal cavity,
   - deviates for a second time to get closer to said axis and re-enters the internal central cavity through at least one second channel, distinct from the at least one first channel and closer to the nozzle than the at least one first channel, which puts the auxiliary chamber into fluidic communication with the internal central cavity, and
   - travels along a final stretch of internal cavity to reach the nozzle and proceeds into the mold.

Another aspect of the invention relates to a tip insert for guiding molten material toward a nozzle during an injection molding process, the tip insert comprising:
- a central body equipped with a central internal cavity which develops along a longitudinal axis and which comprises a first cavity portion and a second cavity portion,
   wherein the second cavity portion
   is axially closer to the nozzle than the first cavity portion,
   communicates fluidically with the nozzle and
   has a smaller cross-section than that of the first cavity portion,
- a valve pin housed in the internal cavity in translatable manner along said axis to reach the second cavity portion and there adjust the flow of molten material exiting the nozzle by occluding the nozzle to an adjustable extent,
- an auxiliary transit chamber for the molten material, the auxiliary chamber being, with respect to said axis, radially more external than the central internal cavity,
- at least one first channel that
   is arranged in the first cavity portion and
   with respect to the said axis it extends radially towards the outside of the tip insert and puts the central internal cavity into fluidic communication with the auxiliary chamber,
- at least one second channel that
   is distinct from at least one first channel,
   is closer to the nozzle than least one first channel,
   is arranged in the second cavity portion, and
   with respect to the said axis extends radially towards the inside of the tip insert and puts the auxiliary chamber into fluidic communication with the central internal cavity,
      the first cavity portion being configured to divert molten material from the central internal cavity into the at least one first channel;
      the auxiliary chamber being configured to divert material from the auxiliary chamber to the at least one second channel.

In the above method and tip insert, the molten plastic material is guided to exit from the central internal cavity at the at least one first channel to enter the auxiliary chamber, while it is guided to re-enter the central internal cavity from the auxiliary chamber at the at least one second channel. The unexpected effect of this path for the molten material is to uniform the advancement front of the plastic material in the mold so as to avoid - or at least significantly mitigate - the formation of the joint line due to the "heart" or cusp advance of fig. 1.

Below are preferred variations for the method and insert tip.

Preferably, to give symmetry to the flow and distribute the loads, it is preferable to implement two or more channels defined as the at least one first channel (hereinafter called the first channels) and two or more channels defined as the at least one second channel (hereinafter called the second channels). What is said below for the first and second channels is intended to also apply to a single first and/or second channel.

In a preferred embodiment, during an injection cycle:
- the valve pin is initially at an end-stroke position inside the second cavity portion and completely occludes both the nozzle and the exit of the second channels,
- the valve pin is moved until it clears (opens) the exit of the second channels,
- and the molten material passes through the second channels to reach the nozzle.

In this way, the movement of the valve pin is exploited to regulate the flow of molten material exiting the second channels.

In a preferred embodiment of the method, during the injection of molten material, the valve pin is moved away from the nozzle so as to leave a space between the nozzle and the walls of the second cavity portion so that the molten material reaches the nozzle both by passing through the second channels and by passing through said space. In fact, in some tests it has been verified that the opening, even partial, of the second cavity portion towards the nozzle can bring benefits in terms of molding quality. In this case, a portion of the plastic material arriving from the first portion of internal cavity continues inside the second portion of internal cavity without passing through the first channels, then mixing at the nozzle with the molten material arriving from the second channels.

In a preferred embodiment, the method comprises the step of mounting an annular member concentrically around said body, in correspondence with the nozzle, to create
- said auxiliary chamber configured to be invaded by the molten material as it exits the first channels until it enters the second channels, and/or
- an annular wall to divert the molten material from the auxiliary chamber into the second channels, and/or
- an annular wall to divert the molten material exiting the first channels into the second channels.

In a preferred embodiment, the auxiliary chamber is donut-shaped or toroidal in shape and is arranged all around the tip insert.

In a preferred embodiment the auxiliary chamber is a residual empty space between the internal surface of the annular member and the external surface of said body, in particular a residual empty space between the internal surface of the annular member and the outlets of said first and second channels.

Preferably the molten material approaches the nozzle travelling said distance while traveling parallel to said axis.

In a preferred embodiment,
the second portion of internal cavity has a smaller cross-section than that of the first portion and coincides with that of the valve pin,
the valve pin can slide inside the cross-section of the second portion,
and in correspondence with the second portion the valve pin hinders the axial flow of the molten material and forces it to deviate into the first channels.

In one variant, in correspondence with the second portion of the internal cavity the valve pin
completely prevents the molten material from continuing to flow in the axial direction, or
allows only a fraction of the molten material arriving from the internal cavity to continue to flow in the axial direction, the remaining molten material being forced to deviate into the first channels. This occurs, for example, by retracting the valve pin beyond the second portion or by leaving a significant clearance between the valve pin and the walls of the second portion closest to it.

In a preferred embodiment, the valve pin is moved until it clears the exit of the second channels but prevents a flow of molten material, tangential to the valve pin and parallel to the axis of the internal cavity, into the second portion. In a different preferred embodiment, the valve pin is moved until the valve pin clears the exit of the second channels and simultaneously allows a flow of molten material tangential to the valve pin and parallel to the axis of the second portion of internal cavity.

In one embodiment, said body is constituted of a coaxial assembly of a first, more internal, piece and a second, more external, piece, where the second piece is mounted around the first piece.

In one embodiment the central internal cavity is made in the first piece and the auxiliary chamber is made in the second piece, the auxiliary chamber resulting
from a cavity present between the first and second piece and/or
from a cavity present in the second piece.

In one embodiment, the first and second channels are formed in the first piece.

In one embodiment, the auxiliary chamber, or said cavity present between the first and second piece, consists of a toroidal or donut-shaped empty space that surrounds, preferably over 360°, the first piece.

In one embodiment, the auxiliary chamber is a residual empty space between the external surface of the second piece and the internal surface of the annular member, in particular it is a residual empty space between the internal surface of the annular member and outlets of said first and second channel obtained in the external surface of the second piece.

In one embodiment the outlets of said first and second channel are recessed in the external surface of the first piece.

In one embodiment the outlets of said first and second channels are fluidically communicating via a depression in the external surface of the first piece.

In one embodiment the outlets of said first and second channels are recessed in the external surface of the second piece.

In one embodiment the outlets of said first and second channels are fluidically communicating via a cavity provided in the external surface of the second piece.

In one embodiment, the second piece comprises at least one pass-through channel that passes through the thickness of the second piece and fluidically connects said first and second channels.

In one embodiment, the second piece comprises a third pass-through channel and a fourth pass-through channel which pass through the thickness of the second piece and are shaped to fluidically join said first and second channels, in particular the third pass-through channel joins with said first channel and the fourth pass-through channel joins with said second channel, and the third pass-through channel joins with the fourth pass-through channel.

In one embodiment the inner surface of the annular member is a cylindrical surface.

More preferably, the annular member comprises a circular lip that protrudes toward the center of the second piece or said body and is sized to converge toward the outer surface of the second piece or said body. Said deflecting wall is made by the circular lip.

In one embodiment, the central internal cavity is obtained in the first piece or said body, and the first piece or said body comprises a first tubular portion joined to a second tubular portion, where the first tubular portion forms said first cavity portion and the second tubular portion forms said second cavity portion.

In one embodiment the second tubular portion snugly houses internally the nozzle while the first tubular portion has a larger cross-section and forms a tubular space around the nozzle for the flow of molten material. The first channels are made in the first tubular portion and the second channels are made in the second tubular portion.

In one embodiment, the cross-section of the second cavity portion is equal to that of the valve pin so as to prevent a tangential flow of molten material between the valve pin and the walls of the second cavity portion. In another embodiment, such tangential flow is permitted by means of a gap between the valve pin and the walls of the second portion, the gap acting as a passage for the molten material.

What has been said for the first piece and the second piece also applies to the variant in which they are made as a single piece.

According to some preferred embodiments, the first channels and/or the second channels
are channels having a development with polar symmetry with respect to said axis; and/or
are channels made in the body of the tip insert, preferably in the walls of the internal cavity; and/or
have a rectilinear or curved development or only rectilinear or curved development; and/or
have axes arranged like the edges of an imaginary polygonal-base pyramid having its axis preferably coinciding with said longitudinal axis; and more preferably, the first channels have axes arranged like the edges of a first imaginary polygonal-base pyramid (preferably regular) having its axis preferably coinciding with said longitudinal axis and its vertex facing away from the nozzle in opposite direction, and/or the second channels have axes arranged like the edges of a second imaginary polygonal-base pyramid (preferably regular) having its axis preferably coinciding with said longitudinal axis and its vertex facing the nozzle.

The following preferred features have experimentally given good results in minimizing the appearance of the cusp-shaped front. If the axis of the first channels forms a first angle with an imaginary plane orthogonal to the longitudinal axis, and/or the axis of the second channels forms a second angle with an imaginary plane orthogonal to the longitudinal axis, preferably
the width of the first angle is greater than the width of the second angle; and/or
the first and second angles are acute angles; and/or
the width of the first angle is at least 15 degrees greater than the width of the second angle, and/or
the first and second angles are chosen in the range from 90 degrees (right angle orthogonal to the longitudinal axis) to 30 degrees.

Preferably the first channels are configured so that they are always open and always give access to the auxiliary chamber regardless of the position of the valve pin.

Preferably the second channels are configured/located so that they are open, to provide an outlet for the molten material coming from the auxiliary chamber, conditionally to the position of the valve pin:
with the valve pin at an end of its stroke inside the second cavity portion to completely close the nozzle, the valve pin plugs the outlet of the second channels in the second cavity portion; while
with the valve pin retracted away from the nozzle but still within the second cavity portion, the valve pin clears said outlet of the second channels.

In one embodiment the auxiliary chamber communicates with said internal cavity only through the first and second channels.

In one embodiment, the auxiliary chamber comprises a deflecting wall configured to deflect the molten material in order to make it go back into the internal central cavity through the second channels.

In one embodiment the deflecting wall is configured to prevent the passage of the molten material toward the nozzle.

In one embodiment the deflecting wall is annular.

In a preferred embodiment, the auxiliary chamber is donut-shaped or toroidal in shape and is arranged all around the tip insert.

The advantages of the invention will be made even clearer by the following description of a preferred system, in which reference is made to the attached drawing in which
- Figure 1 shows an injection front of injected material;
- Figure 2 shows a three-dimensional view of an injection tip insert;
- Figure 3-4 show cross-sectional views of the tip insert in two different operating configurations according to the II-II plane;
- Figure 5 shows an enlargement of the central part of Fig. 4;
- Figure 6 shows an injector including the injection tip insert;
- Figures 7 and 8 show cross-sectional views of a variant of the tip insert.

In the figures, equal elements are indicated by equal numbers.

Referring to the figures, the end of a tip insert 10 used to transfer molten material into a mold cavity 12 is shown.

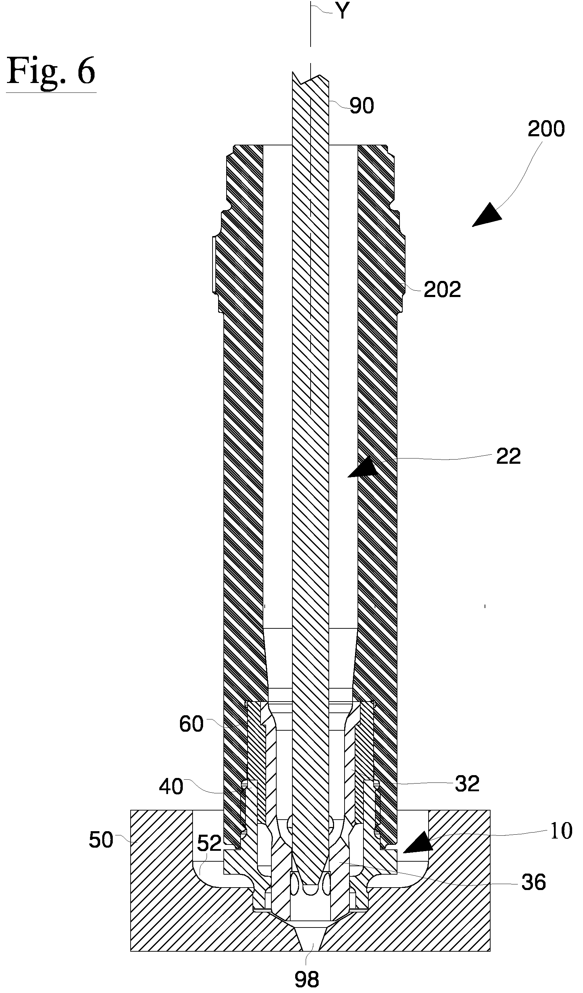

The tip insert 10 is part of an injector 200 (fig. 6) which is usually mounted inside one or more plates that make up the mold and which is fixed to a known distribution manifold of the molten material (not shown). In particular, the tip insert 10 is mounted at the end of an injector body 200.

The tip insert 10 comprises a hollow innermost body 20 that defines an axial cavity 22 that extends longitudinally along a central axis Y (which preferably is also of polar symmetry for the tip insert 10). In the cavity 22, in a known manner, a valve pin 90 is coaxially housed that can be moved along the Y axis to close or clear with its tip 92 a nozzle 98 that allows molten material to be introduced into the cavity 12.

Mounted on the outside of the body 20 is a bushing 60 which is threaded on an end portion for coupling with a ring nut 40.

Note that the tip insert 10 could also be made as single-piece without dividing it into body 20, bushing 60 and ring nut 40. For example, when the body 20 is made of steel, the bushing 60 can be omitted. However, the subdivision of the tip insert 10 into body 20, bushing 60 and ring nut 40 improves the mechanical resistance when tightening the ring nut 40 onto the injector body 20, 202, and it is possible to manage the choice of materials for the part close to the nozzle 98 with greater flexibility.

The body 20 comprises a first tubular portion 32 joined to a second tubular portion 36, which is closer to the nozzle 98 and preferably also tapered and narrower.

The first tubular portion 32 internally defines a first cavity 34 and the second tubular portion 36 internally defines a second cavity 38. The cavities 34, 38 together make up the axial cavity 22.

The first cavity 34 has dimensions such as to leave an annular space 70 around the pin 90, that is, the pin 90 is placed at the centre of the first cavity 34 and the cross-section of the pin 90 is smaller than that of the first cavity 34. The pin 90 slides snugly inside the second cavity 38; and preferably the cross-section of the pin 90 is equal to that of the second cavity 38 so as to prevent a direct passage of the molten material towards the mould cavity.

The ring nut 40 extends externally to the body 20 surrounding a part of the first tubular portion 32, the joining area between the portions 32, 36 and almost all of the second tubular portion 36.

In particular, the free end of the second tubular portion 36, the one closest to the nozzle 98, is surrounded by a portion of the ring nut 40 and together they rest on a complementary seat 54 provided on the bottom 52 of an annular support 50 which has the shape of a cup or truncated cone.

The nozzle 98 is a passage formed in the annular support 50 at the center of the bottom 52. The annular support 50 may also be directly part of a mold plate.

The ring nut 40 is configured for
- delimiting an empty auxiliary circular chamber 44 between the external surface of the second tubular portion 36 and the internal walls of the circular chamber 44, and
- providing a deflecting surface 48 to direct molten material from the circular chamber 44 towards the second tubular portion 36.

For simplicity of construction, for example the deflecting surface 48 is an inclined plane, or a radiusing, directed towards the second tubular portion 36.

Preferably, for simplicity of construction, the deflecting surface 48 is a portion of the circular chamber 44.

More preferably, the ring nut 40 comprises a circular lip 42 that protrudes toward the center of the ring nut 40 and is sized to converge toward the outer surface of the second tubular portion 36. There may or may not be a small gap between the circular lip 42 and the outer surface of the second tubular portion 36, as long as the molten material is unable to infiltrate therein and exit the chamber 44.

Approximately in the transition zone between the first tubular portion 32 and the second tubular portion 36 there are first channels 76 which pass through the thickness of the body 20, putting the first cavity 34 in communication with the circular chamber 44. In the second tubular portion 36 there are second channels 78 which pass through the thickness of the second tubular portion 36, putting the circular chamber 44 in communication with the second cavity 38.

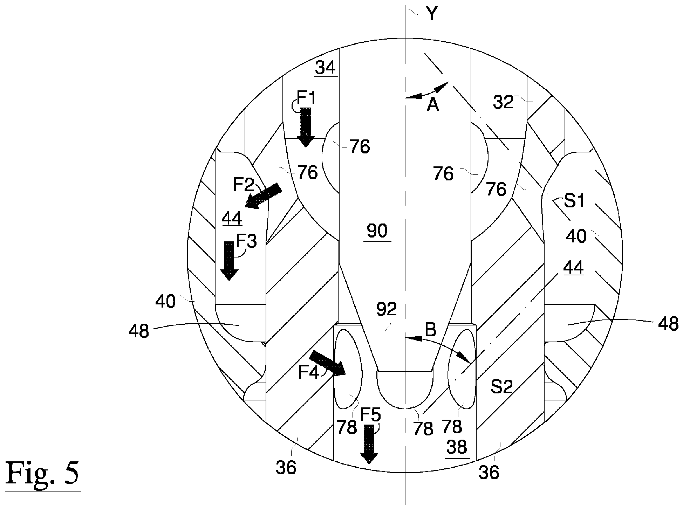

The molten material arrives in the first tubular portion 32 along a direction parallel to the central axis Y. With respect to this direction, the axis S1 of the first channels 76 is preferably inclined towards the outside of the tip insert 10 to deviate by an acute angle A (fig. 5).

The second channels 78 start from the external surface of the second tubular portion 36 approximately at the circular lip 42, preferably so that the deflecting surface 48 connects continuously with the internal walls of the second channels 78, so as to uniformly accompany the molten material and avoid stagnation areas.

The molten material moves inside the circular chamber 44 along a direction parallel to the central axis Y. The axis S2 of the second channels 78 is preferably inclined and convergent towards the inside (and preferably the center) of the tip insert 10 to form an acute angle B with the central axis Y.

### OPERATION

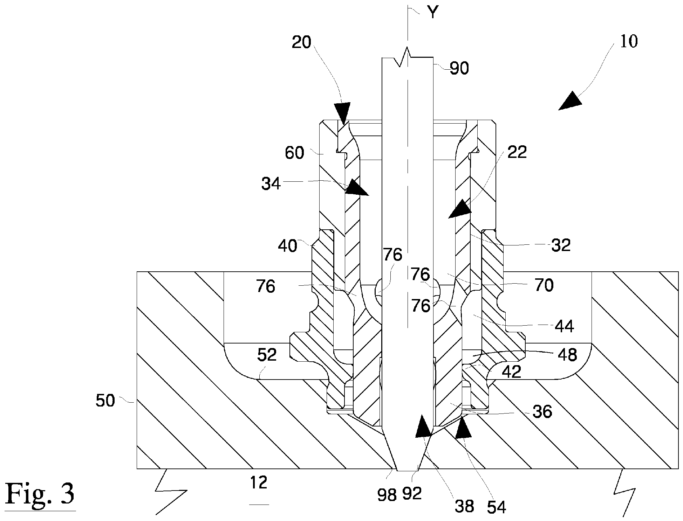

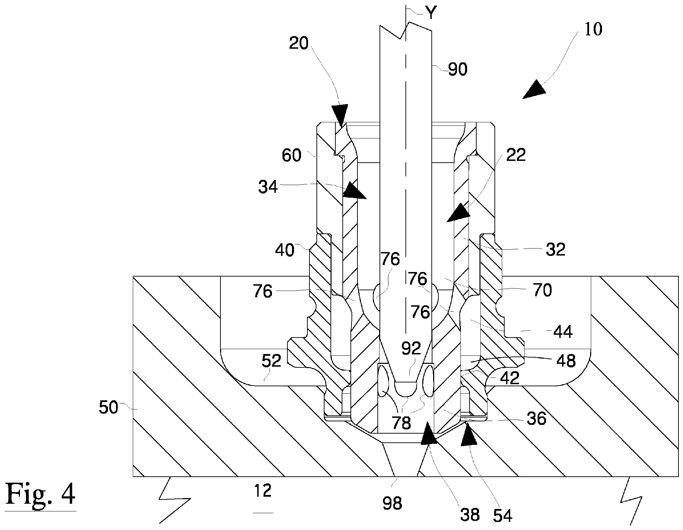

1. The injection cycle begins with the molten material arriving from the manifold into the first cavity 34 (arrow F1, fig. 5) along a direction parallel to the central axis Y, and the pin 90 is completely inserted into the second cavity 38 to plug the nozzle 98 (see fig. 3). The radial dimensions of the pin 90 are such that when the pin 90 is at the end of its stroke inside the second cavity 38 (nozzle closed), it prevents the passage of molten material from the second cavity 38 to the nozzle 98 because it plugs the channels 78.
2. The pin 90 is then moved (fig. 4+5) so that the tip 92 clears the outlet of the nozzle 98, but not so much as to cause the pin 90 to exit the second cavity 38. The radial dimensions of the pin 90 are such that when the tip of the pin 90 is retracted (open position or open gate, Fig. 4) the outlet of the channels 78 in the cavity 38 is cleared and the molten material can flow sequentially from the annular space 70 to the channels 76, to the circular chamber 44, to the channels 78, inside the second cavity 38 and arrive at the nozzle 98. In this phase the molten material preferably does not arrive inside the cavity 38 by passing directly from the space 70 to the chamber 38, i.e. between the tip of the pin 90 and the walls of the cavity 38.
3. After the molten material has completely invaded the first cavity 34, it encounters opposition from the pin 90 which plugs the second cavity 38, so that it is forced to exit the body 20 (arrow F2) through the first channels 76 to end up inside and invade the circular chamber 44. However, a variant is possible in which the geometries of the components allow the molten material to reach the nozzle 98 not only through the channels 76, 78 but simultaneously also from the annular space 70 to the second cavity 38 along a path which tangentially grazes the tip and/or the external surface of the pin 90.
4. From the channels 76 the molten material proceeds parallel to the Y-axis (arrow F3) outside the second tubular portion 36 and reaches the deflecting surface 48. Thanks to the latter it is diverted into the second channels 78 (arrow F4).
5. The molten material then flows through the second channels 78, re-enters the body 20, invades the volume of the second cavity 38 left free by the retraction of the pin 90, recombines and continues towards the nozzle 98 travelling parallel to the central axis Y (arrow F5) and then enters the cavity 12.

The surprising effect of this path for the molten material is that the advancement front of the molten material becomes uniform so as to avoid the formation of the cusp profile as shown in Fig. 1.

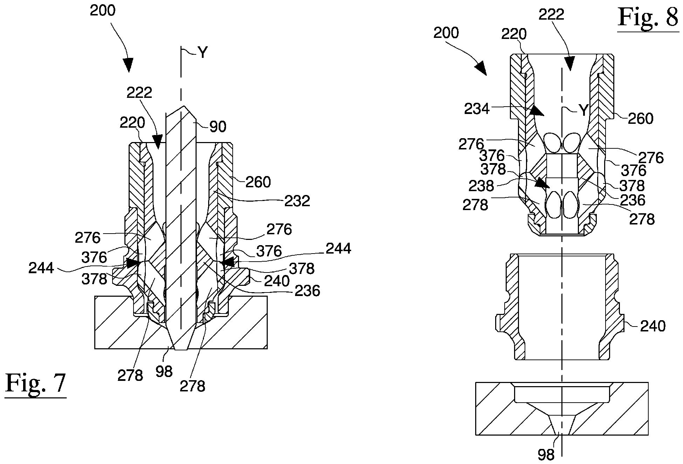

A variant of tip insert 200 is illustrated in figures 7 and 8.

The tip insert 200 comprises a central body formed of the coaxial assembly of a first piece 220, hollow and more internal, and a second more external piece 260, in the example in the form of a tubular bushing.

The piece 220 defines an axial cavity 222, for the valve pin 90, which extends longitudinally along a central axis Y (which preferably is also of polar symmetry for the tip insert 200).

The piece 260 is preferably threaded on an end portion for coupling with a ring nut 240.

The piece 220 comprises a first tubular portion 232 joined to a second tubular portion 236 which is closer to the nozzle 98.

Note that the piece 220, the piece 260 and the ring nut 240 correspond to the body 20, the bushing 60 and the ring nut 40, with the differences described below.

The first tubular portion 232 internally defines a first cavity 234 and the second tubular portion 236 internally defines a second cavity 238. The cavities 234, 238 together form the axial cavity 222, and have the same function as the cavities 34, 38.

Approximately in the transition area between the first tubular portion 232 and the second tubular portion 236 there are first channels 276 which pass through the thickness of the piece 220 starting from the first cavity 234 up to the outside of the piece 220. In the second tubular portion 236 there are second channels 278 which pass through the thickness of the second tubular portion 236 starting from the second cavity 238 up to the outside of the piece 220.

The channels 276, 278 have a respective exit or outlet on the external surface of the second tubular portion 236, where they join with respective pass-through channels 376, 378 obtained in the body of the piece 260. The channels 376, 378 pass through the thickness of the piece 260 so as to reach the internal surface of the ring nut 240.

Preferably the channels 376, 378 are aligned and/or coaxial with the outlet of the channels 276, 278, for greater continuity.

Preferably the outlets of the channels 376, 378 are adjacent.

The channels 376, 378, and preferably also the outlets of the channels 276, 278, are shaped to remain fluidically communicating with each other even after the ring nut 240 has been mounted around the piece 260.

As can be seen, a structural difference compared to the tip insert 10 is that the piece 260 is longer than the bushing 60 and wraps the piece 220 around the portions 232, 236, up to the base of the ring nut 240. Consequently in the tip insert 200 the auxiliary circular chamber 44 becomes the empty space 244 that remains between the outlets of the channels 276, 278, the channels 276, 378 and the internal surface of the ring nut 240. In this way the risk of material stagnation can be reduced.

Preferably the internal surface of the ring nut 240 is cylindrical in shape, for symmetry.

In a variant, the outlets of the channels 276, 278 are recessed in the piece 220 to create a communication tunnel for the molten material from the channel 376 to the channel 378. In particular, the channels 276, 278 fluidically communicate via a depression in the external surface of the piece 220. Such depression is visible in fig. 7 and 8 in correspondence with the tip of the arrow associated with the reference 244.

The inner surface of the ring nut 240 acts as a wall, or lid, towards the outside for the channels 376, 378.

The arrowhead associated with reference 244 also indicates the area where the channels 376, 378 communicate with each other.

The molten material arriving from the channels 276 continues into the channels 376, is deflected by the internal surface of the ring nut 240 into and/or towards the channels 378, from where it will then continue towards the second channels 278 and the nozzle 98.

It is also not necessary for the ring nut 240 to include a circular lip such as the lip 42.

The operation of the tip insert 200 is analogous to that of the tip insert 10, considering for the channels 276, 278 the same effects and function as the channels 76, 78.

Compared to a direction parallel to the Y-axis, also the axis of the channels 276 and/or 376 is preferably inclined towards the outside of the tip insert to deviate by an acute angle as the angle A; and also the axis of the second channels 278 and/or 378 is preferably inclined and converging towards the inside (and preferably the center) of the tip insert to form an acute angle with the central axis Y as the angle B.

The angle A and/or B could also be right or obtuse. Preferably, the angles A and B are chosen between 90° (right angle orthogonal to the Y axis) and 30°. The closer these angles are to zero, the more the pressure losses suffered by the flow of molten material are reduced. Therefore, the slowing down of the molten material will be lower and therefore the possibility of stagnation, which reduces its temperature and causes an inhomogeneous filling.

The first channels 76, 276 and the second channels 78, 278 may also be replaced by a single channel, respectively. The channels 76, 78, 276, 278 or the only channel may have, for example, circular, elliptical, elongated, kidney-shaped, square or rectangular cross-section.

To give symmetry to the flow of molten material and minimize pressure drops, preferably the axes of the first channels 76 and/or 276 and/or 376 are arranged like the edges of an imaginary pyramid with a polygonal base, where the base of the pyramid is orthogonal to the central axis Y and the vertex of the pyramid faces away from the nozzle 98. For the same purpose, preferably the axes of the second channels 78 and/or 278 and/or 378 are arranged like the edges of an imaginary pyramid with a polygonal base, where the base of the pyramid is orthogonal to the central axis Y and the vertex of the pyramid faces toward the nozzle 98.

Preferably one or each of said pyramids has its vertex on the central Y axis, with the advantage of avoiding flow imbalances between the various channels. Otherwise the molten material would preferentially flow through some of them and the filling would be inhomogeneous or heart-shaped.

Preferably the base of one or each of said pyramids is a regular polygon, with the advantage of avoiding flow imbalance between the various channels.

The number of channels 76, 78, 276, 278, 376, 378 may also be different from the one illustrated.

The channels 76, 78, 276, 278, 376, 378 may also have a curvilinear development (e.g. via 3D printing), not necessarily just rectilinear.

The channels 76, 78, 276, 278 cooperate with the pin 90, and are placed at a distance, calculated parallel to the Y axis starting from the nozzle, so that by sliding the pin 90 it is possible to block or not the flow of the molten material and convey it into the chambers described previously.

## Claims

1. Method for injecting a molten material from a nozzle into a mold during an injection molding process,
wherein the molten material is guided towards the nozzle via a tip insert which
is provided with an internal central cavity that develops along a longitudinal axis, and houses in the internal cavity a valve pin translatable along said axis to reach one end of the tip insert and there adjust the flow of molten material coming out of the nozzle by shutting the nozzle to an adjustable extent,
wherein the molten material
- travels the central cavity parallel to the longitudinal axis while surrounding the valve pin,
- arrives in proximity of the nozzle and deviates for a first time away from said axis to exit the internal central cavity through at least one first channel which takes it outside the internal central cavity and into an auxiliary chamber of the tip insert,
- approaches the nozzle traveling a distance inside the auxiliary chamber,
- deviates for a second time to get closer again to said axis and re-enters the internal central cavity through at least one second channel, distinct from the at least one first channel and closer to the nozzle than the at least one first channel, which puts in fluidic communication the auxiliary chamber with internal central cavity, and
- travels along a final section of internal central cavity to reach the nozzle and proceeds inside the mould.

2. Method according to claim 1, wherein during the injection of molten material the valve pin is moved away from the nozzle so as to leave a space between the nozzle and the walls of the internal central cavity so that the molten material reaches the nozzle by both crossing the at least one second channel and crossing said space.

3. Method according to any of the preceding claims, wherein during an injection cycle:
- the valve pin is initially at its end-of-travel position inside an end portion of the internal central cavity and completely occludes both the nozzle and the outlet of the at least one second channel,
- the valve pin is displaced until it clears the exit of the at least one second channel, and
- the molten material passes through the at least one second channel to reach the nozzle.

4. Method according to any one of the previous claims, with the step of mounting concentrically around the tip insert, in correspondence with the nozzle, an annular member to create
- said auxiliary chamber, configured to be invaded by the molten material when it exits the at least one first channel until it enters the at least one second channel, and/or
- an annular wall for diverting the molten material from the auxiliary chamber into the at least one second channel.

5. Method according to claim 4, wherein said auxiliary chamber has a donut or toroidal shape and is arranged entirely around the tip insert.

6. Tip insert for guiding molten material toward a nozzle during an injection molding process, the tip insert comprising:
- a central body provided with an internal central cavity which develops along a longitudinal axis and which comprises a first cavity portion and a second cavity portion, wherein the second cavity portion
is axially closer to the nozzle than the first cavity portion,
communicates fluidically with the nozzle and
has a smaller cross-section than that of the first cavity portion,
- a valve pin mounted translatable inside the internal central cavity along said axis to reach the second cavity portion and there adjust the flow of molten material coming out of the nozzle by shutting the nozzle to an adjustable extent,
- an auxiliary chamber for the molten material which with respect to said axis is radially more external than the internal central cavity,
- a first channel that
is arranged in the first cavity portion and
with respect to said axis extends radially towards the outside of the tip insert and puts the internal central cavity into fluidic communication with the auxiliary chamber,
- a second channel that
is distinct from the first channel,
is closer to the nozzle than the first channel,
is arranged in the second cavity portion, and
with respect to said axis extends radially towards the inside of the tip insert and puts the auxiliary chamber into fluidic communication with the internal central cavity,
the first cavity portion being configured to divert molten material
from the internal cavity into the first channel; and
from the auxiliary chamber towards the second channel.

7. Tip insert according to claim 6, wherein the internal central chamber is made in a first piece of the tip insert and the auxiliary chamber is made in a second piece mounted around the first piece, the auxiliary chamber resulting from a cavity provided between the first and second piece.

8. Tip insert according to claim 6 or 7, comprising a first tubular portion joined to a second tubular portion,
wherein the first tubular portion forms the first cavity portion and the second tubular portion forms the second cavity portion,
the second tubular portion internally housing snugly the valve pin and the first tubular portion having wider cross-section than that of the second tubular portion to form a tubular space around the valve pin for the flow of molten material,
the first channel being made in the first tubular portion and the second channel being made in the second tubular portion.

9. Tip insert according to claim 6 or 7 or 8, comprising first channels as said first channel and second channels as said second channel, wherein the first channels and/or second channels have axes arranged like the edges of an imaginary pyramid with a polygonal base having an axis coinciding with said longitudinal axis.

10. Nozzle tip according to claim 9, wherein the first channels have axes arranged as the edges of a first imaginary pyramid with a polygonal base having an axis coinciding with said longitudinal axis and a vertex facing in a direction opposite to the nozzle, and the second channels have axes arranged like the edges of a second imaginary pyramid with a polygonal base having an axis coinciding with said longitudinal axis and a vertex facing the nozzle.
